# EUROPÄISCHE PATENTANMELDUNG

(11) **EP 0 556 653 A1**
(43) Veröffentlichungstag der Anmeldung: **25.08.1993**
(21) Anmeldenummer: 93101727.1
(22) Anmeldetag: 04.02.1993
(51) Int. Cl.: B29C 47/88

(54) **Blaskopf für die Herstellung von Schlauchfolien aus thermoplastischem Kunststoff**

(30) Priorität: 20.02.1992 DE 4205185
(71) Anmelder: Windmöller & Hölscher, D-49525 Lengerich (DE)
(72) Erfinder: Sensen, Klemens, Dipl.-Ing., W-4540 Lengerich (DE); Linkies, Jürgen, W-4506 Hagen a.T.W. (DE)
(74) Vertreter: Gossel, Hans K., Dipl.-Ing.

(57) **Zusammenfassung**

Ein Blaskopf für die Herstellung von Schlauchfolien aus thermoplastischem Kunststoff besteht aus einem ringförmigen Düsenspalt, einer Innenkühleinrichtung zum Zu- und Abführen von kühlender Luft, die zugleich als Stützluft und dem Aufblasen des extrudierten Folienschlauches zu einer Schlauchfolienblase dient, und aus einem den ringförmigen Düsenspalt umgebenden Außenkühlring, aus dem ein den extrudierten Folienschlauch kühlender Blasluftstrom ausblasbar ist und dessen äußerer ringförmiger Teil sich in Extrusionsrichtung über den Düsenspalt hinaus erstreckt und eine ringförmige Luftleitfläche für den Blasluftstrom bildet. Um eine unerwünschte Saugwirkung auf den extrudierten Folienschlauch zu vermeiden und eine ungleichmäßige Abkühlung zu verhindern, ist der äußere ringförmige Teil (3) in einer zu dem Düsenspalt (2) parallelen Ebene auf einer zu diesem horizontalen Kreislinie mit Bohrungen (11) versehen, die in der Luftleitfläche (6) münden und aus denen ein zusätzlicher Luftstrom (10) ausblasbar ist.

## Beschreibung

Die Erfindung betrifft einen Blaskopf für die Herstellung von Schlauchfolien aus thermoplastischem Kunststoff mit einem ringförmigen Düsenspalt, mit einer Innenkühleinrichtung zum Zu- und Abführen von kühlender Luft, die zugleich als Stützluft und dem Aufblasen des extrudierten Folienschlauches zu einer Schlauchfolienblase dient, und mit einem den ringförmigen Düsenspalt umgebenden Außenkühlring, aus dem ein den extrudierten Folienschlauch kühlender Blasluftstrom ausblasbar ist und dessen äußerer ringförmiger Teil sich in Extrusionsrichtung über den Düsenspalt hinaus erstreckt und eine ringförmige Luftleitfläche für den Blasluftstrom bildet.

Bei einem aus der DE-OS 27 25 832 bekannten Blaskopf dieser Art wird der aus dem ringförmigen Spalt des Außenkühlrings austretende Kühlluftstrom zumindest im Endbereich des ringförmigen Kanals, der zwischen der Luftleitfläche des Außenkühlringes und dem Mantel des extrudierten Kunststoffschlauches gebildet ist, eingeschnürt, weil der äußere Randbereich der Luftleitfläche an den sich aufweitenden Kunststoffschlauch angenähert ist. Durch diese Verengung des ringförmigen Blasluftstromkanals tritt aufgrund des Venturi-Effekts ein Unterdruck und damit eine auf den extrudierten Kunststoffschlauch wirkende Saugwirkung ein, die zu einer früheren und unkontrollierten Aufweitung des Kunststoffschlauches führen kann, als sie an sich erwünscht ist. Weiterhin verwirbelt sich bei dem bekannten Blaskopf bereits im Endbereich der Luftleitfläche der Kühlluftstrom mit der wärmeren Umgebungsluft, so daß der extrudierte Folienschlauch den Einflüssen unterschiedlich warmer Umgebungsluft ausgesetzt ist, was insbesondere dann nachteilig ist, wenn diese auf einer Seite z.B. von dem Extruder erwärmt und auf anderen Seiten beispielsweise durch äußere Einflüsse, wie Fenster oder dergleichen, kühler ist.

Bei dem bekannten Blaskopf ist der äußere ringförmige Teil des Außenkühlrings zwar von einer umlaufenden Stabilisierungskammer umgeben, die über Kanäle an eine Kühlluftzuführungseinrichtung angeschlossen ist, wobei die Stabilisierungskammer an ihrem oberen Ende mit einem Turbulenzerzeuger versehen ist. Mit dieser Stabilisierungskammer lassen sich größere Kühlleistungen nicht erzielen und außerdem vermag diese die nachteiligen Wirkungen des an der Luftleitfläche auftretenden Unterdrucks und der zutretenden äußeren wärmeren Umgebungsluft nicht zu verhindern.

Aufgabe der Erfindung ist es daher, einen Blaskopf der eingangs angegebenen Art zu schaffen, mit dem einerseits eine Saugwirkung auf den extrudierten Folienschlauch im Bereich des Außenkühlringes verhindert und andererseits eine ungleichmäßige Abkühlung durch das unkontrollierte Hinzutreten wärmerer Umgebungsluft vermieden wird.

Erfindungsgemäß wird diese Aufgabe dadurch gelöst, daß der äußere ringförmige Teil in einer zu dem Düsenspalt parallelen Ebene auf einer zu diesem konzentrischen Kreislinie mit Bohrungen oder einem ringförmigen Spalt versehen ist, die bzw. der in die Luftleitfläche münden bzw. mündet und aus denen ein zusätzlicher Luftstrom ausblasbar ist.

Die erfindungsgemäße Ausgestaltung des äußeren ringförmigen Teils des Außenkühlrings, dessen Innenseite eine Luftleitfläche bildet, verhindert das Entstehen eines Unterdruckes, da in den Bereichen, in denen sich aufgrund des Venturi-Effekts ein Unterdruck aufbauen könnte, die Bohrungen oder der ringförmige Spalt münden. Ein Vakuum kann also nicht entstehen, da dieses sofort mit aus den Bohrungen oder im ringförmigen Spalt austretender Luft aufgefüllt wird.

Von besonderer Wichtigkeit bei der erfindungsgemäßen Ausgestaltung des Blaskopfes ist, daß der aus den Bohrungen oder im ringförmigen Spalt austretende Luftstrom einen den Kühlluftstrom einhüllenden Luftstrom bildet, der nach Verlassen der Luftleitfläche noch immer den Kühlluftstrom einfaßt und schädliche Einwirkungen ungleichmäßig erwärmter Umgebungsluft ausschließt oder zumindest mildert.

Versuche haben gezeigt, daß bei dem erfindungsgemäß ausgestalteten Blaskopf die Außenluft erst dann auf die Schlauchfolie einwirken kann, wenn diese im wesentlichen bereits soweit abgekühlt ist, daß hinzutretende ungleichmäßig erwärmte Außenluft keinen Einfluß mehr auf die Kühlung der Schlauchfolie und damit insbesondere auch keinen Einfluß mehr auf die Dickenverteilung über den deren Umfang hat.

Zweckmäßigerweise verlaufen die Bohrungen oder der Spalt spitzwinkelig oder etwa parallel zu den Luftleitflächen, so daß der austretende Kühlluftstrom spitzwinkelig oder etwa parallel in den Hauptkühlluftstrom eingeleitet wird.

Die Luftleitflächen können parallel zu der Mittellinie des Blaskopfes verlaufen oder aber im Querschnitt nach-außen hin gekrümmt sein, wobei die Bohrungen oder der Spalt im mittleren Bereich der Luftleitfläche oder in dem Scheitelbereich an deren Krümmung münden.

In weiterer Ausgestaltung der Erfindung ist vorgesehen, daß der ringförmige Spalt zwischen zwei konzentrischen Ringen des äußeren ringförmigen Teils gebildet ist, von denen der äußere Ring den inneren überragt und deren radial nach innen weisenden, nicht überdeckten Teile Luftleitflächen bilden. Diese Ausgestaltung gestattet es, den einhüllenden Luftstrom parallel zu dem Hauptkühlluftstrom ausströmen zu lassen, so daß sich eine gute und sich nicht verwirbelnde Schichtung ergibt.

Zweckmäßigerweise verlaufen die Luftleitflächen der beiden Ringe im Querschnitt etwa parallel zur Blaskopfachse.

Der äußere Ring kann zur Vergrößerung oder Verkleinerung des Querschnitts des ringförmigen Austrittsspalts für die zusätzliche Blasluft in axialer Richtung verstellbar sein.

Zweckmäßigerweise tritt aus den Bohrungen oder dem ringförmigen Spalt ein Blasluftstrom mit niedrigerer Geschwindigkeit als der des Hauptkühlluftstroms aus.

Zweckmäßigerweise ist der aus den Bohrungen oder dem ringförmigen Spalt austretende Hühlluftstrom von der Zuführung des Hauptkühlluftstroms abgezweigt.

In besonders vorteilhafter Weise ist die axiale Länge der Luftleitflächen relativ groß ausgebildet. Die axiale Länge der Luftleitfläche bzw. der Luftleitflächen kann sich bis in den Aufweitungsbereich des extrudierten Kunststoffschlauches erstrecken.

Ausführungsbeispiele der Erfindung werden nachstehend anhand der Zeichnung näher erläutert. In dieser zeigt:
- Fig. 1: einen Teilquerschnitt durch eine erste Ausführungsform eines Blaskopfes mit Außenkühlring und
- Fig. 2: einen Querschnitt durch eine zweite Ausführungsform eines Blaskopfes mit Außenkühlring.

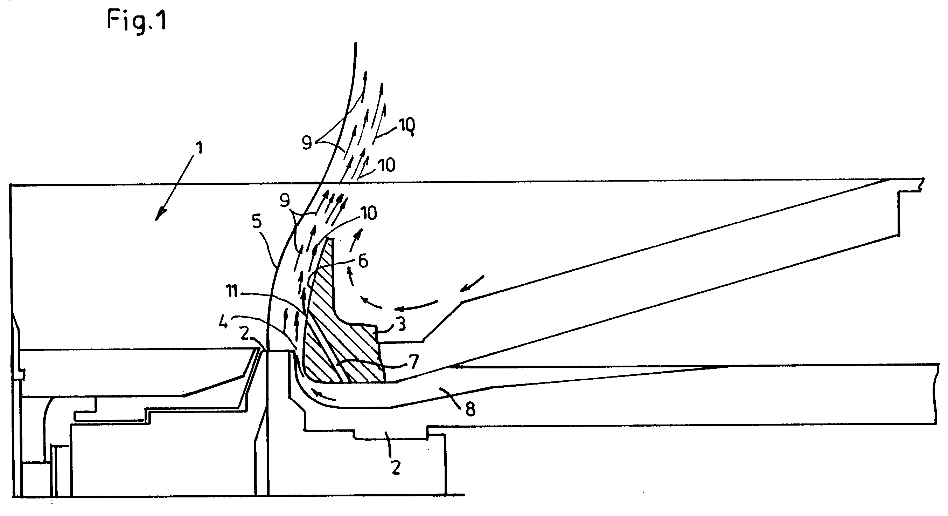

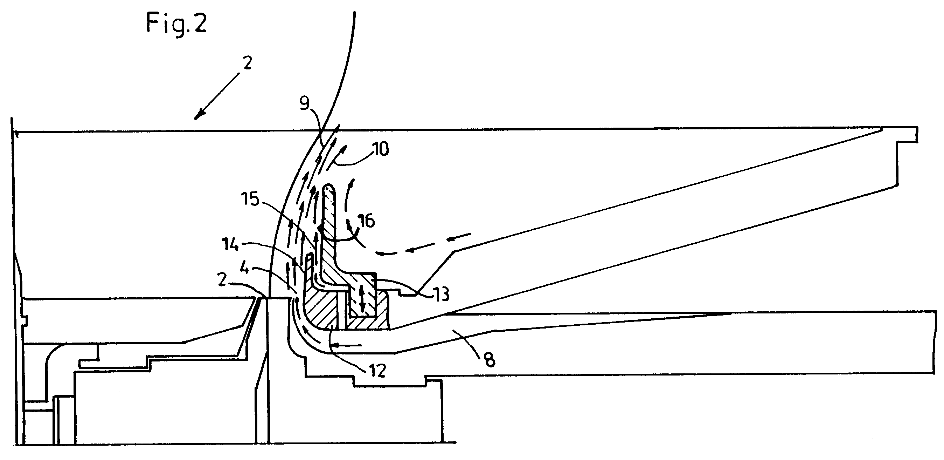

Der in den Fig. 1 und 2 dargestellte Folienblaskopf 1 mit seinem ringförmigen Düsenspalt 2 und seinen Einrichtungen zum Zu- und Abführen stützender und den extrudierten Kunststoffschlauch zu einer Folienblase aufblasenden Kühlluft ist bekannter Bauweise, so daß auf eine nähere Beschreibung verzichtet werden kann.

In Fig. 1 besteht der Außenkühlring aus einem inneren ringförmigen Teil 2 und einem äußeren ringförmigen Teil 3, zwischen denen etwa in Höhe des ringförmigen Düsenspalts 2 ein ringförmiger Spalt 4 gebildet ist, aus dem der Hauptblasluftstrom austritt, der den extrudierten Folienschlauch 5 von außen her kühlt. Der äußere ringförmige Teil 3 des Außenkühlrings weist auf seiner Innenseite eine in Querschnitt leicht gekrümmte Kühlluftleitfläche 6 auf, die mit dem Mantel des extrudierten Kunststoffschlauches 5 einen ringförmigen Kanal begrenzt. Der äußere Kühlring 3 ist über seinen Umfang mit nebeneinanderliegenden Bohrungen 7 versehen, die etwa im mittleren Bereich der Leitflächen 6 auf einer Kreislinie spitzwinkelig in den zwischen der Leitfläche 6 und dem Folienschlauch 5 gebildeten ringförmigen Kanal münden. In die Bohrungen 7 tritt ein kühlender Luftstrom aus dem Zuführungskanal 8 für die Kühlluft ein.

Der kühlende Hauptluftstrom ist durch die Pfeile 9 gekennzeichnete. Aus der Fig. 1 ist ersichtlich, daß dieser kühlende Hauptluftstrom von einem einhüllenden Luftstrom 10 eingefaßt ist, der aus den Mündungen 11 der Bohrungen 7 austritt.

Das innere ringförmige Teil könnte auch durch einen Teil des äußeren Lippenringes des ringförmigen Düsenspalts 2 gebildet sein.

Das Ausführungsbeispiel nach Fig. 2 unterscheidet sich von dem nach Fig. 1 dadurch, daß das äußere ringförmige Teil des Außenkühlringes aus zwei Ringen ausgebaut ist, und zwar aus einem inneren ringförmigen Teil 12 und einem äußeren ringförmigen Teil 13. Das innere ringförmige Teil 12 weist anschließend an den ringförmigen Spalt 4 eine zylinderringförmige Luftleitfläche 14 auf. Die hochgezogene Lippe des inneren ringförmigen Teils 12 bildet mit dem äußeren Ring 13 einen ringförmigen Austrittsspalt 15 für den austretenden Luftstrom 10. Auch der äußere Ring 13 weist eine zylinderringförmige Luftleitfläche 16 auf. Der einhüllende Luftstrom 10 kann zwischen dem Innenring 12 und dem Außenring 13 aus dem ringförmigen Spalt 15 im wesentlichen parallel zu dem Hauptkühlluftstrom 9 austreten.

Auch der einhüllende Luftstrom 10 ist wie bei dem Ausführungsbeispiel nach Fig. 1 von dem Kühlluftstrom 8 abgezweigt.

## Patentansprüche

1. Blaskopf für die Herstellung von Schlauchfolien aus thermoplastischem Kunststoff
mit einem ringförmigen Düsenspalt,
mit einer Innenkühleinrichtung zum Zu- und Abführen von kühlender Luft, die zugleich als Stützluft und dem Aufblasen des extrudierten Folienschlauches zu einer Schlauchfolienblase dient, und
mit einem dem ringförmigen Düsenspalt umgebenden Außenkühlring, aus dem ein dem extrudierten Folienschlauch kühlender Blasluftstrom ausblasbar ist und dessen äußerer ringförmiger Teil sich in Extrusionsrichtung über den Düsenspalt hinaus erstreckt und eine ringförmige Luftleitfläche für den Blasluftstrom bildet,
**dadurch gekennzeichnet**,
daß der äußere ringförmige Teil (3; 12, 13) in einer zu dem Düsenspalt (2) parallelen Ebene auf einer zu diesem horizontalen Kreislinie mit Bohrungen (11) oder einem ringförmigen Spalt (15) versehen ist, die bzw. der in der Luftleitfläche (6; 14, 15) münden bzw. mündet und aus denen ein zusätzlicher Luftstrom (10) ausblasbar ist.

2. Blaskopf nach Anspruch 1, dadurch gekennzeichnet, daß die Bohrungen oder der Spalt spitzwinkelig oder etwa parallel zu der Luftleitfläche (6; 14, 15) verlaufen.

3. Folienblaskopf nach Anspruch 1 oder 2, dadurch gekennzeichnet, daß die Luftleitfläche (6) im Querschnitt nach außen hin gekrümmt ist und die Bohrungen oder der Spalt im mittleren Bereich der Luftleitfläche oder in dem Scheitelbereich von deren Krümmung münden.

4. Blaskopf nach Anspruch 1 oder 2, dadurch gekennzeichnet, daß der ringförmige Spalt (15) zwischen zwei konzentrischen Ringen (12,13) des äußeren ringförmigen Teils des Außenkühlrings gebildet ist, von denen der äußere Ring (13) den inneren Ring (12) überragt und deren radial nach innen weisenden, nicht überdeckten Teile die Luftleitflächen (14,15) bilden.

5. Blaskopf nach Anspruch 4, dadurch gekennzeichnet, daß die Luftleitflächen (14,15) beider Ringe (12,13) im Querschnitt etwa parallel zur Blaskopfachse verlaufen.

6. Blaskopf nach Anspruch 4 oder 5, dadurch gekennzeichnet, daß der äußere Ring (13) zur Vergrößerung oder Verkleinerung des Querschnitts des ringförmigen Austrittsspalts (15) für die zusätzliche Blasluft (10) in axialer Richtung verstellbar ist.

7. Blaskopf nach einem der Ansprüche 1 bis 6, dadurch gekennzeichnet, daß aus den Bohrungen oder dem ringförmigen Spalt ein Blasluftstrom (10) mit niedrigerer Geschwindigkeit als der des Hauptkühlluftstroms (9) austritt.

8. Blaskopf nach einem der Ansprüche 1 bis 7, dadurch gekennzeichnet, daß der aus den Bohrungen oder dem ringförmigen Spalt austretende Hühlluftstrom (10) von der Luftzuführung (8) des Hauptkühlluftstroms abgezweigt ist.

9. Blaskopf nach einem der Ansprüche 1 bis 8, dadurch gekennzeichnet, daß sich die axiale Länge der Luftleitfläche (6) bzw. der Luftleitflächen (14,15) bis in den Aufweitungsbereich des extrudierten Kunststoffschlauches erstrecken.
